# EUROPÄISCHE PATENTANMELDUNG

(11) **EP 0 634 565 A1**
(43) Veröffentlichungstag der Anmeldung: **18.01.1995**
(21) Anmeldenummer: 94108186.1
(22) Anmeldetag: 27.05.1994
(51) Int. Cl.: F01M 5/02, F01P 11/20, F02N 17/06

(54) **Verfahren zur Verbesserung des Kaltstartverhaltens von Verbrennungsmaschinen**

(30) Priorität: 12.07.1993 DE 4323210; 26.01.1994 DE 4402215
(71) Anmelder: MAN Nutzfahrzeuge Aktiengesellschaft, 80976 München (DE)
(72) Erfinder: Schadel, Ottmar, Dipl.-Ing., D-82008 Unterhaching (DE); Eisenreich, Hans, Dipl.-Ing., D-82223 Eichenau (DE); Feigl, Erwin, Dipl.-Ing., D-82266 Inning (DE); Drewitz, Hans, Dipl.-Ing. (FH), D-80797 München (DE); Hörmann, Rudolf, D-85221 Dachau (DE); Steiner, Lorenz, D-85250 Altomünster (DE); Brandl, Franz, D-82340 Feldafing (DE)

(57) **Zusammenfassung**

Zur Speicherung der Abwärme von Verbrennungsmaschinen (10) und deren Nutzung zur Vorwärmung der Verbrennungsmaschine kurz vor einem Kaltstart, wird die gespeicherte Abwärme in den Motorölkreis (29) und/oder in die Starterbatterie eingekoppelt.

## Beschreibung

Die Erfindung bezieht sich auf ein Verfahren zur Verbesserung des Kaltstartverhaltens von Verbrennungsmaschinen durch Einkopplung von Wärmeenergie in das Maschinensystem sowie auf Einrichtungen zur Durchführung des Verfahrens.

Ein Verfahren dieser Art ist aus der Zeitschrift BWK, Band 43 (1991) Nr. 6, Juni, Seiten 333/37 bekannt. Danach wird der Motorblock über warmes Kühlwasser vor dem Startvorgang vorgewärmt. In dem Kühlkreislauf eines Fahrzeuges ist ein Latentwärmespeicher in Reihe mit dem Heizungswärmetauscher geschaltet. Bei Betrieb der Verbrennungsmaschine strömt das aufgeheizte Kühlwasser durch den Latentwärmespeicher, so daß beim Abschalten der Verbrennungsmaschine Wärmeenergie entsprechend der Dimensionierung im Latentwärmespeicher gespeichert wird. Beim nächsten Kaltstart wird die Wärme mit einer kurzfristigen Leistung freigesetzt, wodurch der Motor innerhalb von ein paar Sekunden so weit aufgeheizt werden kann, daß die Emissionen von Schadstoffen bereits in der Startphase reduziert werden können. Außerdem wird das Heizungssystem des Fahrzeugs schneller auf Betriebstemperatur gebracht, wodurch beispielsweise die Windschutzscheibe schneller als bisher von Beschlag oder Eis befreit werden kann.

Der Erfindung liegt die Aufgabe zugrunde, ein Verfahren der eingangs genannten Art weiter zu entwickeln.

Die Aufgabe wird erfindungsgemäß mit den Merkmalen des Anspruches 1 gelöst.

Die Erfindung ermöglicht eine flexible Handhabung bzw. Anwendung von Maßnahmen zur Verbesserung des Kaltstartverhaltens von Verbrennungsmaschinen stationärer oder mobiler Art, bei der je nach Bedarf und verfügbarer Energiequelle eine oder in Kombination von Vorwärmvorgängen durchführbar sind. Damit kann sowohl der Startvorgang in extrem kalten Klimazonen sichergestellt als auch eine rasche Überführung der Verbrennungsmaschine auf Betriebstemperatur erreicht werden.

Die verwendbaren Energiequellen sind die Abwärme der Verbrennungsmaschine im Motoröl oder im Kühlwasser sowie ein Ölbrenner oder eine Heizung, wie z. B. die Standheizung für Omnibusse. Die Energiequellen können einzeln oder in Kombination verwendet werden. Die Einkopplung der Wärmeenergie erfolgt in die Verbrennungsmaschine über das Trägermedium Motoröl und/oder in die Batterie über Motoröl, Wasser oder Luft. Für die Verbrennungsmaschine kann aber auch zusätzlich Wasser und/oder Luft als Wärmeträger verwendet werden.

Der Vorwärmvorgang für die Verbrennungsmaschine kann gemäß einer weiteren Ausgestaltung der Erfindung durch mindestens einen Wärmespeicher erfolgen, der warmes Öl aus der Ölwanne aufnimmt und speichert, das vor einem Kaltstart zur Vorwärmung in die Ölwanne zurückgepumpt wird. Eine Pumpe ist vorzugsweise in Strömungsrichtung dem Wärmespeicher nachgeschaltet, um eine Überlastung des Wärmespeichers durch Überdruck zu vermeiden.

Durch den Einsatz eines in einen Motorölkreislauf integrierten Wärmespeichers ist es möglich, einen Kaltstart auch unter Extrembedingungen, wie z. B. Inbetriebnahme der Verbrennungsmaschine in arktischen oder antarktischen Klimazonen zu gewährleisten, indem die Mobilität der Kurbelwelle durch dünnflüssig gehaltenes Öl aufrechterhalten bleibt. Dieser Wärmespeicherkreislauf läßt sich in einfacher Weise an der Ölwanne anbringen oder bei bestehenden Verbrennungsmaschinen nachrüsten.

Der Austausch des Öles im Schmiersystem wird vorzugsweise in Abhängigkeit von den Vor- und Rücklauftemperaturen des Wärmespeichersystems geregelt und durch einen von Hand bedienbaren Startschalter vor dem Start des Motors eingeleitet.

Der Ölaustausch erfolgt gemäß einer weiteren Ausgestaltung der Erfindung vorzugsweise in dem Schmierölkreislauf, so daß die verfügbare Wärmeenergie nahezu vollständig in der Umgebung der beweglichen Teile der Verbrennungsmaschine ausgebreitet werden kann. Vorzugsweise wird der Wärmespeicher direkt in den Schmierölkreislauf in Strömungsrichtung vor oder nach der Motorölpumpe angeschlossen. Hierdurch entfällt eine zusätzliche Pumpe. Es ist auch möglich, mit einer dem Wärmespeicher zugeordneten, zusätzlichen Umwälzpumpe das warme Öl in Strömungsrichtung nach der Motorölpumpe und vor dem Ölfilter in das Motorschmiersystem einzubringen. Der Regelkreis, der die Motorölpumpe beim Anlaßvorgang einschaltet, kann derart modifiziert werden, daß der Einschaltvorgang vor einem Startvorgang eingeleitet wird, wenn die Öltemperatur eine vorbestimmte Temperatur unterschreitet.

Es ist auch eine Wärmeenergie-Einkopplung in das Motoröl mittels eines Wärmetauschers möglich, wenn die Wärmeenergie aus dem Kühlwassersystem der Verbrennungsmaschine oder einer Heizung genutzt werden soll.

Gemäß einer weiteren Ausgestaltung der Erfindung erfolgt eine Vorwärmung der Elektrobatterie oder Starterbatterie der Verbrennungsmaschine, womit ein Leistungsverlust der Batterie durch Abkühlung aufgefangen und damit der Startvorgang mit voller Leistung sichergestellt werden.

Hierbei wird Wärmeenergie aus dem Motorkühlsystem oder dem Motorölsystem gespeichert und zur Aufwärmung der Batteriesäure entweder mittels Wärmetauscherschlangen, die in direkter Berührung mit der Batteriesäure stehen, oder mittels einer Doppelwandung der Batterie in diese eingekoppelt. Auch in diesem Fall läßt sich eine Heizung als Energiequelle verwenden, insbesondere wenn eine derartige Heizung ohnehin in Verbindung mit der Verbrennungsmaschine, z. B. eines Fahrzeuges, vorhanden ist.

Als Wärmespeicher können ein oder mehrere Latentwärmespeicher oder Warmwasser- oder Warmöl-Wärmespeicher oder eine Heizung, z. B. Standheizung bei Fahrzeugen, je alleine oder in Kombination vorgesehen werden.

Die Wärmespeicher sind vorzugsweise hochvakuumisoliert, wobei der Warmwasser oder Warmölspeicher aber auch lediglich als doppelwandiger Behälter ausgebildet sein kann. Der Warmölwärmespeicher ist vorzugsweise in der Ölwanne angeordnet.

Mittels einer Heizung bzw. Standheizung im Kreislauf des Wärmespeichers kann die Wärmekapazität unter Beibehaltung des Wärmespeichervolumens angehoben werden.

Erfindungsgemäß kann je nach Anwendung oder nach Bedarf eine Kombination von mindestens zwei der vorgenannten Vorwärmsysteme gegebenenfalls in Verbindung mit einem Wärmespeichersystem für den Kühlkreislauf der Verbrennungsmaschine vorgesehen werden.

Dabei können eine oder mehrere Wärmequellen, nämlich Wasser bzw. Motoröl oder Heizung genutzt werden. Für die Wärmeabgabe ist die Verwendung eines oder mehrerer Wärmespeicher oder Wärmetauscher möglich, die in getrennten, parallelen oder Reihenschaltungen bezüglich der Wärmequelle als auch der Verbraucher angeordnet sein können.

Ferner ist die Zuordnung von Standheizungen zu einem oder mehreren Speichern möglich.

Auf die Weise ist es möglich, Verbrennungsmaschinen, insbesondere für Fahrzeuge, entsprechend den Kältebedingungen auszusrüsten, den das jeweilige Fahrzeug ausgesetzt ist. So kann beispielsweise für arktische Klimazonen die Motoröl- und Batterievorwärmung mit oder ohne Standheizung vorgesehen werden, während für gemäßigtere Zonen die Ölvorwärmung alleine oder die Kühlwasservorwärmung unter Umständen mit Batterievorwärmung gewählt wird.

Es läßt sich auch ein doppelwandiger Wärmetauscher zur Aufnahme von zwei Wärmespeichermedien, Öl und Wasser, in getrennter Form verwenden. Dabei dient das äußere Wärmemedium gleichzeitig zur Aufrechterhaltung der Wärmeenergie des innenlagernden Mediums. Die beiden Räume können aber auch gleichzeitig je für sich einen Wärmeträgerkreislauf bilden. Damit reduziert sich die mit der kalten Umgebung in Verbindung stehende Kontaktfläche der Wärmespeicher.

In der Zeichnung sind Ausführungsbeispiele der Erfindung schematisch dargestellt. Es zeigen:
- Fig. 1: ein erstes Ausführungsbeispiel zur Vorwärmung des Motoröls,
- Fig. 2a - c: drei weitere Ausführungen für die Ölvorwärmung,
- Fig. 3: Ausführungsbeispiele zur Batterievorwärmung.

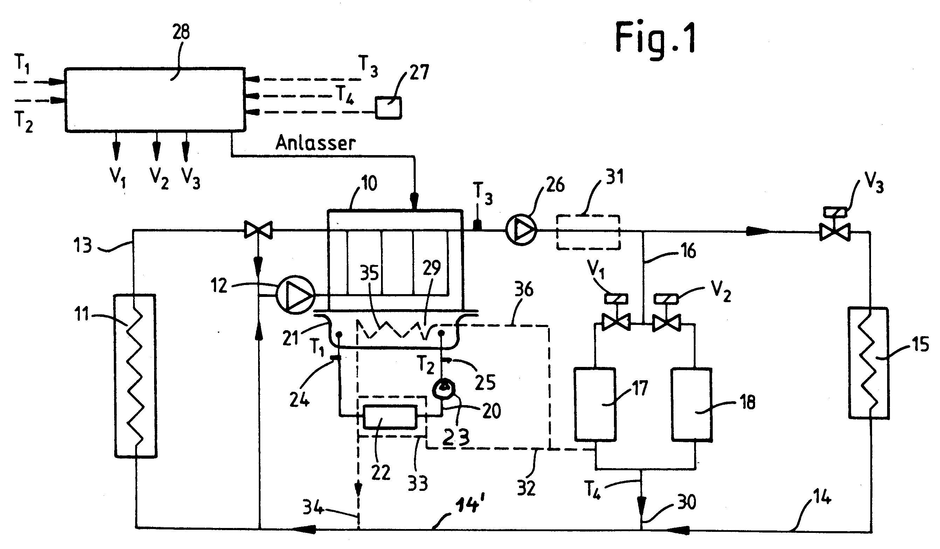

Fig. 1 zeigt eine Verbrennungsmaschine 10, die von einem einen Kühler 11 und einem eine Wasserpumpe 12 enthaltenden Kühlwasserkreislauf 13 durchsetzt ist. Parallel zum Kühlwasserkreislauf 13 ist ein Wärmeträger-Kreislauf 14 vorgesehen, über den und einen Wärmetauscher 15 die Abwärme der Verbrennungsmaschine 10, z. B. für Heizzwecke, genutzt werden kann.

Zur Vorwärmung der Verbrennungsmaschine 10 vor einem Kaltstart ist ein Öl-Aufheizungskreislauf 20 vorgesehen, der von der Ölwanne 21 der Verbrennungsmaschine 10 ausgeht und einen Wärmespeicher 22 sowie eine ihr nachgeschaltete Umwälzpumpe 23 trägt. Zwei Temperaturfühler 24 und 25 messen die Vorlauf- und Rücklauftemperatur an der Ölwanne 21. Die Aufladung des Wärmespeichers 22 erfolgt durch Einschalten der vorzugsweise nach dem Wärmespeicher 22 angeschlossenen Umwälzpumpe 23 im Betrieb der Verbrennungsmaschine nach Erreichen der Betriebstemperatur.

Wenn die Verbrennungsmaschine 10 erneut gestartet werden soll, wird ein Startschalter 27 betätigt, der eine Regelung 28 aktiviert. Dabei wird zunächst die Temperatur T₁ des Motoröls an der Maschine gemessen. Übersteigt diese einen vorbestimmten Wert, z. B. 0° oder 10°C, wird sofort anschließend der Anlasser der Verbrennungsmaschine 10 betätigt.

Unterschreitet die Temperatur T₁ den vorbestimmten Wert, dann wird über die Regelung 28 die Umlaufpumpe 23 eingeschaltet, wodurch der Wärmeträger aus dem Wärmespeicher 22 in die Ölwanne 21 geführt wird. Nach dem Austausch des Inhaltes des Wärmespeichers 22 durch kühles Öl 29 aus der Ölwanne 21, sinkt die Temperatur T₂ im Wärmespeichervorlauf auf einen Wert gleich T₁, was die Regelung 28 signalisiert mit der Folge, daß die Pumpe 23 abgeschaltetwird, damit nun der in die Ölwanne 21 gebrachte Wärmeträger mittels einer nicht dargerstellten Schmierölpumpe in das Schmierölsystem 10 gepumpt wird. Währenddessen bleibt das kalte Öl 29 aus der Ölwanne im Wärmespeicher 22 geparkt, womit eine unnötige Erwärmung des kalten Öles 29 vermieden wird. Die Beendigung der Öldurchflutung wird von der Regelung 28 dem Fahrer durch optisches und/oder akustisches Signal signalisiert, sodaß er den Motoranlassen kann, oder der Anlaßvorgang wird automatisch durch die Regelung 28 eingeleitet.

Um den Kaltstart weiter zu sichern und gegebenenfalls zu verkürzen, vor allem bei Tiefsttemperaturen, z. B. in arktischen oder antarktischen Klimazonen, kann ein weiterer Wärmespeicherzweig 16 mit einem Warmwasserbehälter 17 und einem Latentwärmespeicher 18 in Parallelschaltung für Kühlwasservorwärmung vorgesehen werden. Diesen Wärmespeichern 17, 18 ist je ein regelbares Ventil V₁ bzw. V₂ zugeordnet. Ferner ist dem Heizungswärmetauscher 15 ebenfalls ein Ventil V₃ zugeordnet. Für den notwendigen Wasserkreislauf sorgt eine Umwälzpumpe 26, die im Heizungsvorlauf in Reihenschaltung zur Parallelschaltung aus Heizungswärmetauscher 15 und Wärmespeichern 17, 18 angeordnet ist. Die Ventile V₁, V₂, V₃ werden mit der Regelung 28 in Abhängigkeit der Temperatur T₃ im Vorlauf 23 aus der Verbrennungsmaschine und der Temperatur T₄ im Wärmetauscherrücklauf 30 geregelt.

Im normalen Betrieb der Verbrennungsmaschine 10 wird diese über den Kühlkreislauf 13 gekühlt. Das aufgeheizte Kühlwasser wird gleichzeitig genutzt, um den Warmwasserspeicher 17 und den Latentwärmespeicher 19 aufzuheizen, indem das Wasser die beiden Wärmespeicher unter Kontrolle der Temperaturen T₃ und T₄ durchflutet. Über die Regelung 28 werden unter Umständen unter Einschaltung der Umwälzpumpe 26 die Ventile V₁ und V₂ immer dann geöffnet, wenn die Wassertemperatur aus der Verbrennungsmaschine 10 einen bestimmten Wert überschreitet oder höher ist als die Wärmespeicher-Vorlauftemperatur T₄.

Bei Bedarf kann zusätzlich ein Ölbrenner oder eine Standheizung 31 im Öl- und/oder Wasserwärmespeichersystem 20 bzw. 16 vorgesehen werden.

Bei einer Kombination der Ölvorwärmung mit einer Kühlwasservorwärmung kann ein System gewählt werden, das nur eine oder beide der verfügbaren Wärmequellen, nämlich Öl und Wasser, nutzt. Die vorstehend beschriebene Ausführung besteht in einem System, in dem beide Wärmequellen je getrennt genutzt werden.

In Fig. 1 sind mit gestrichelten Linien zwei Alternativen eingezeichnet, bei denen Wärmeenergie aus dem erwärmten Kühlwasser gespeichert und vor dem Kaltstart an zwei unterschiedliche Medien abgegeben wird. Gemäß einer Alternative wird das in einem oder mehreren Wärmespeichern 17, 18 geparkte Warmwasser über eine Leitung 32, 34, die einen Wärmetauscher 22, 33 für das Motoröl 29 enthält, dem Kühlwasserkreislauf 14' zugeleitet. Auf diese Weise wird ein Teil der gespeicherten Wärmeenergie zunächst dem Motoröl 29 abgeführt und die Restwärme an das Kühlwasser abgegeben. Bei der Ausbildung eines doppelräumigen Wärmespeichers, wie es beispielsweise in Fig. mit 22, 33 gezeigt ist, können darin zwei Medien, nämlich warmes Motoröl im inneren Raum und Warmwasser im äußeren Raum gespeichert werden.

Der Wärmetauscher ist gemäß der zweiten Alternative in der Form einer Heizschlange 35 ausgebildet und innerhalb der Ölwanne 21 angeordnet. In diesem Fall wird das gespeicherte Warmwasser durch eine Leitung 36, die Heizschlange 35 und die Leitung 34 zum Kühlkreislauf 14' geführt. In dieser Ausführung entfällt die Pumpe 23 für die Ölvorwärmung.

Bei Nutzung eines Ölbrenners bzw. einer Standheizung 31 als alleinige Energiequelle entfallen die wasserbeaufschlagten und anderen Wärmespeicher. Die Heizung 31 kann, wie in Fig. 1 dargestellt und für Raumheizzwecke von Fahrzeugen im Stillstand üblich, im Motorkühlkreislauf angeordnet sein. Das mit der Heizung 31 erwärmte Wasser fließt zur Motorvorwärmung über die in diesem Fall miteinander verbundenen Leitungen 16 und 30 in den Kühlwasserkreislauf 14', wenn eine Vorwärmung nur durch Kühlwasser gewählt wird. Anderenfalls wird das aufgewärmte Wasser vorher über eine der Leitungen 32 oder 36 durch die Wärmetauscher 22, 23 bzw. 35 zur Vorwärmung des Motoröls geleitet.

Es ist auch eine direkte Erwärmung des Motoröls mittels eines Ölbrenners möglich, der in so einem Fall der Ölleitung 20 zugeordnet wird.

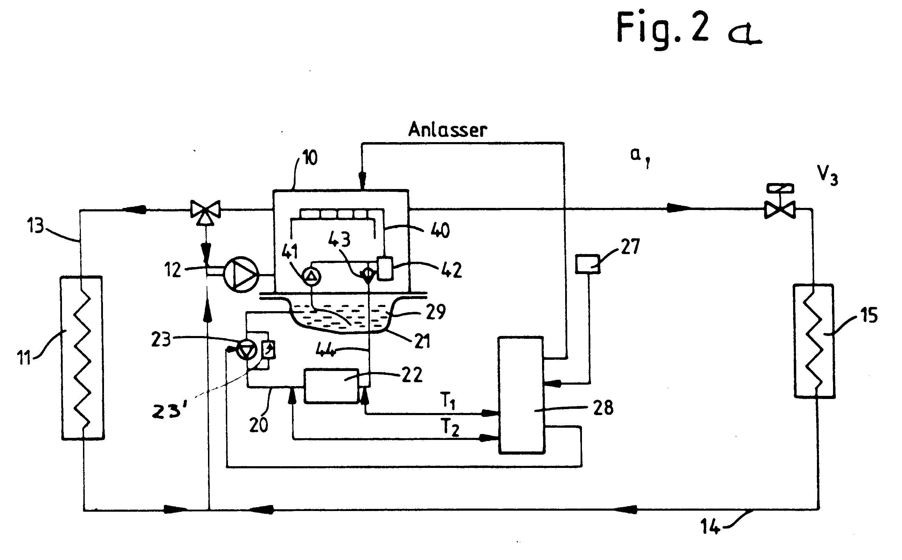

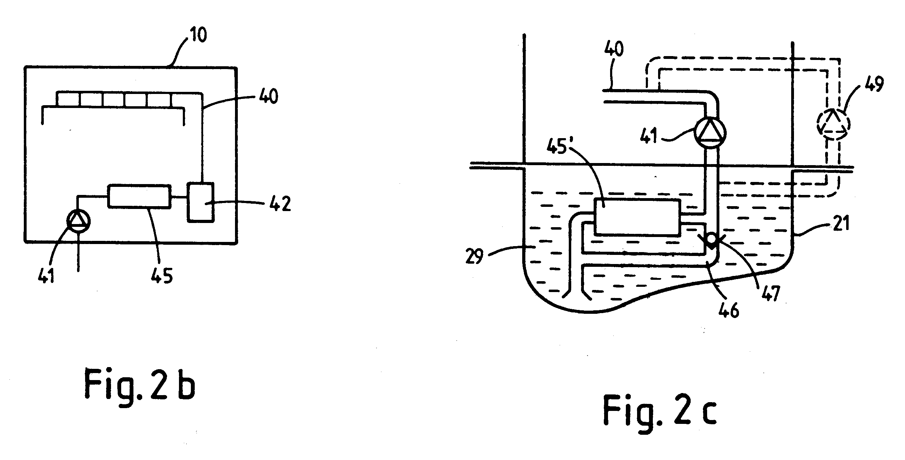

Ein günstigeres Resultat durch Ölvorwärmung wird erreicht, wenn gespeicherte Wärmeenergie in das Motorölschmiersystem 40 bis 42 zwischen der Schmierölpumpe 41 und dem Ölfilter 42 oder vor der Schmierölpumpe eingekoppelt wird. Ausführungen hierzu sind in Fig. 2a und b gezeigt.

Ein externer Wärmespeicher 22 wird, wie im Beispiel gemäß Fig. 1 bereits beschrieben, über einen Leitungskreis 20 und einer Pumpe 23' mit heißem Motoröl 29 aus der Ölwanne 21 gespeist. Zum Unterschied zu Fig. 1 wird gemäß Fig. 2a das warme Öl aus dem Speicher 22 über eine mit einem Rückschlagventil 43 ausgestattete Leitung 44 direkt in den Ölschmierkreis 40 der Verbrennungsmaschine in Strömungsrichtung hinter der Motorölpumpe 41 und vor dem Ölfilter 42 eingeleitet. Die Steuerung dieses Vorwärmsystems erfolgt in ähnlicher Weise wie die der vorherbeschriebenen Ausführungen. In Fig. 2a ist die Umwälzpumpe 23' für den Wärmespeicher 22 in Strömungsrichtung vor dem Wärmespeicher 22 gezeichnet. In so einem Fall ist zum Schutz des Wärmespeichers 22 ein Überdruckventil 23'' erforderlich. Es ist jedoch günstiger, die Pumpe 23' nach dem Wärmespeicher 22 anzuschließen, womit das Überdruckventil 23'' entfällt.

Der Wärmespeicher 45 ist, wie Fig. 2b darstellt, vorzugsweise im Schmierölkreislauf 40 integriert. Damit entfällt ein getrennter Kreislauf 20 und die zusätzliche Pumpe 23'. Der Wärmespeicher 45, der in der Ölwanne 21 angeordnet sein kann, ist zwischen der Schmierölpumpe 41 und dem Ölfilter 42 im Schmierölsystem angeschlossen und wird bei Betrieb der Verbrennungsmaschine ständig mit Motoröl durchflutet.

Die Anordnung des Wärmespeichers 45 innerhalb des Motorölschmiersystems 40 läßt sich auf unterschiedliche Weise realisieren. Der Wärmespeicher kann aber auch vor der Motorölpumpe, außerhalb oder innerhalb der Motoreinheit angeordnet sein und mit oder ohne Bypassleitung versehen werden.

Die Fig. 2b und c stellen zwei Ausführungsbeispiele dazu da. Gemäß Fig. 2c ist der Wärmespeicher 45' innerhalb der Ölwanne 21 angeordnet und in Strömungsrichtung vor der Motorölpumpe 41 angeschlossen. Dem Wärmespeicher 45' ist eine Bypassleitung mit einem Rückschlagventil 47 zugeordnet, der eine Ölzirkulation auch bei dickflüssigem Öl 29 sicherstellen soll. Die Motorölpumpe wird derart gesteuert, daß sie bei niedrigen Öltemperaturen (außerhalb des Wärmespeichers 45') ohne Startvorgang einschaltbar ist. Es läßt sich natürlich eine Zusatzpumpe 49 für den Vorwärmbetrieb verwenden.

Ein weiteres Element, das Einfluß auf einen Startvorgang insbesondere Kaltstartvorgang hat, ist die einer Verbrennungsmaschine zugeordnete Elektro- bzw. Starterbatterie.

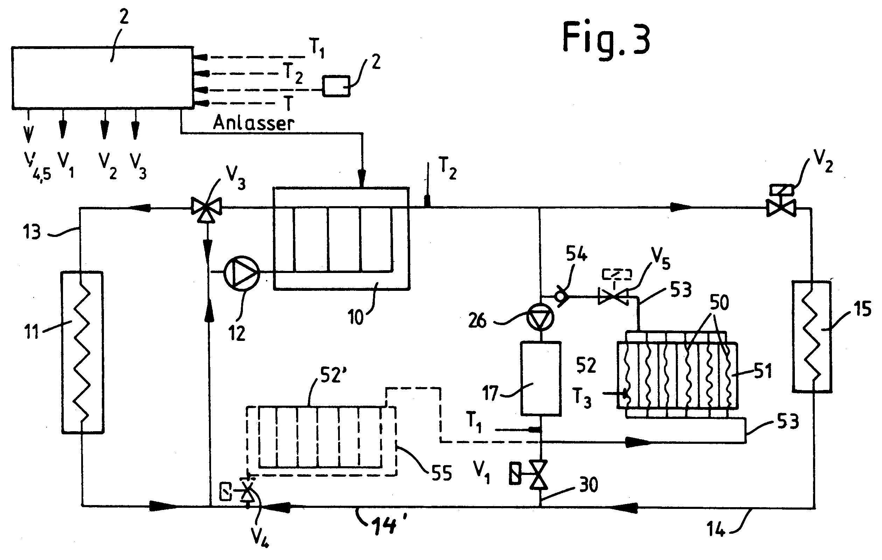

Fig. 3 zeigt zwei Alternativvorschläge für die Vorwärmung von Batterien zur Verbesserung von Kaltstart-Vorgängen.

Ein Wasserwärmespeicher 17 ist entsprechend Fig. 1 an den Kühlwasserkreislauf 14' angeschlossen. In Parallelschaltung zum Warmwasserspeicher 17 ist ein in Form von Kühlschlangen 50 ausgebildeter Wärmetauscher angeschlossen, dessen Kühlschlangen 50 durch die Zellen 51 der Batterie 52 geführt und über Sammelleitungen 53 zusammengefaßt sind.

Bei Erreichen hoher Aufheiztemperaturen T₂ des Kühlwassers wird ein Ventil V₁ in der Anschlußleitung 30 zwischen dem Wärmespeicher 17 und dem Kühlkreislauf 14' geöffnet und die dem Wärmespeicher 17 zugeordnete Umwälzpumpe 26 eingeschaltet, um den Wärmespeicher 17 mit heißem Wasser zu durchfluten, bis die Vorlauftemperatur T₁ des Wärmespeichers 17 auf die Temperatur T₂ gebracht ist.Die Pumpe 26 wird wieder abgeschaltet und das Ventil V₁ geschlossen.

Vor einem Kaltstart wird eine mit der Batterie 52 zusammenhängende Temperatur T₃ gemessen und in der Regelung 28 mit einem Richtwert verglichen. Ist die Temperatur T₃ niedriger als der Richtwert, wird über die Regelung die in diesem Fall in dem Batterie-, Wärmespeicher-Kreislauf 50, 17, 53 angeordnete Umwälzpumpe 26 eingeschaltet, so daß das kühlere Wasser aus den Heizschlangen 50 durch das wärmere Wasser aus dem Wärmespeicher 17 ausgetauscht wird, womit eine Anhebung der Batteriesäuretemperatur und damit eine Anhebung deren Leistung erreicht wird.

Durch Temperaturkontrolle wird der Wasseraustausch registriert und die Pumpe 26 ausgeschaltet. Der Anlaßvorgang kann manuell oder automatisch folgen. Das Ventil V₁ bleibt in diesem Vorgang geschlossen. Um bei der Aufladung des Wärmespeichers 17 eine Durchflutung des Wärmetauschert 50 der Batterie 52 zu vermeiden, ist im Batteriekreislauf 53 ein Rückschlagventil 54 vorgesehen, das auch durch ein regelbares Ventil V₅ ersetzt werden kann, wenn beispielsweise ein Wärmespeicher 17 großer Kapazität verwendet wird, der gleichzeitig zur Vorwärmung des Kühlwassers dienen soll. In so einem Fall könnte nach dem Warmwasseraustausch in dem Batteriewärmetauscher 50 das Ventil V₅ geschlossen und das Ventil V₁ geöffnet werden, um das restliche Warmwasser aus dem Wärmespeicher 17 in den Kühlwasserkreislauf 14' einzubringen.

In diesem Fall kann auch eine Serienschaltung zwischen Batterie und Wärmespeicher gewählt werden. Diese Alternative ist in Fig. 3 mit gestrichelten Linien dargestellt, wobei die Batterie 52' mit einer Doppelwandung 55 ausgestattet ist, durch die das Warmwasser aus dem Wärmespeicher 17 vor der Einleitung in den Kühlwasserkreislauf 14' durchströmt und einen Teil der Wärmeenergie an die Batterie 52' abgibt. Der Durchfluß durch die Batterie 52 kann über ein Ventil V₄ geregelt werden.

Auch für die Batterievorwärmung kann ein Ölbrenner oder die Wärme aus dem Motoröl verwendet werden.

Es ist ferner jede Kombination der vorstehend beschriebenen Ausführungsvarianten möglich. So kann beispielsweise der parallel zum Wärmespeicher 17 geschaltete Batterievorwärmkreis 53 eine Heizschlange bzw. einen Wärmetauscher einschließen, der gleichzeitig für eine Motorölvorwärmung sorgt, wie er beispielsweise in Verbindung mit der Heizschlange 35 beschrieben wurde. Eine weitere Variante ist die Nutzung von Wärmeenergie aus dem Motoröl 29 für die Vorwärmung der Batterie und/oder des Kühlwassers und/oder des Motoröls.

## Patentansprüche

1. Verfahren zur Verbesserung des Kaltstarts von Verbrennungsmaschinen durch Einkopplung von Wärmeenergie in das Maschinensystem vor einem Startvorgang, dadurch gekennzeichnet, daß Wärmeenergie aus der Abwärme der Verbrennungsmaschine gespeichert und/oder aus einer Ölheizung verwendet wird, und daß die Wärmeenergie in das Motoröl und/oder in eine der Verbrennungsmaschine zugeordneten Elektrobatterie eingebracht wird.

2. Verfahren nach Anspruch 1, dadurch gekennzeichnet, daß die Abwärme der Verbrennungsmaschine in mindestens einem als Latentwärmespeicher und/oder Mediumspeicher ausgebildeten Wärmespeicher während des Betriebes der Verbrennungsmaschine gespeichert wird.

3. Verfahren nach Anspruch 2, dadurch gekennzeichnet, daß als Wärmeübertragungsmedium das Motoröl und/oder das Kühlwasser für die Verbrennungsmaschine verwendet wird.

4. Verfahren nach einem der vorhergehenden Ansprüche, dadurch gekennzeichnet, daß zur Vorwärmung des Motoröls ein Ölkreislauf mit einem Wärmespeicher (22) oder einem Wärmetauscher (20, 33 bzw. 35) mit der Ölwanne (21) verbunden wird.

5. Verfahren nach Anspruch 1, dadurch gekennzeichnet, daß durch Zwischenschalten eines Wärmespeichers (45, 45') direkt im Motorschmierkreislauf (40) die Wärmeenergie in das Motorschmiersystem eingekoppelt wird.

6. Verfahren nach Anspruch 1, dadurch gekennzeichnet, daß der Elektro- oder Starterbatterie (52. 52') der Verbrennungsmaschine ein Wärmetauscher (50, 55) zugeordnet wird, mit dem die Wärmeenergie aus einem Wärmespeicher (17) und/oder einer Ölheizung (31) in die Batteriesäure eingebracht wird.

7. Verfahren nach Anspruch 6, dadurch gekennzeichnet, daß Wärmetauscher für die Batterie (52, 52') verwendet werden, die als Doppelwandung (55) oder als durch die Batteriezellen (51) durchführende Wärmetauscherschlangen (50) ausgebildet sind.

8. Einrichtung zur Durchführung des Verfahrens gemäß Anspruch 1 unter Anwendung einer Energiequelle zur Vorwärmung des Verbrennungsmaschinensystems vor einem Kaltstart, gekennzeichnet durch Abwärme der Verbrennungsmaschine (10) speichernde Wärmespeicher (17, 18, 22, 45, 45') und/oder Ölbrenner (31) und durch Mittel (20, 23; 32, 33; 35, 36; 45, 45'; 50, 53; 55), mit denen die gespeicherte und/oder durch den Ölbrenner erzeugte Wärmeenergie in das Motoröl (29) des Motorschmiersystems (40) der Verbrennungsmaschine (10) und/oder in eine der Verbrennungsmaschine zugeordneten Elektrobatterie oder Starterbatterie (52, 52') einkoppelbar ist.
